# FASCICULE DE BREVET EUROPEEN

(11) **EP 0 889 576 B1**
(45) Date de publication et mention de la délivrance du brevet: **24.11.2004**
(21) Numéro de dépôt: 98401639.4
(22) Date de dépôt: 01.07.1998
(51) Int. Cl.: H02K 41/03

(54) **Moteur linéaire**
Linearmotor
Linear motor

(30) Priorité: 03.07.1997 FR 9708437
(43) Date de publication de la demande: 07.01.1999
(73) Titulaire: PARVEX SAS, 21009 Dijon (FR)
(72) Inventeur: Maestre, Jean-François, 21000 Dijon (FR)
(74) Mandataire: Prugneau, Philippe

(56) Documents cités:
- EP-A- 0 230 605
- EP-A- 0 385 203
- US-A- 4 563 602
- PATENT ABSTRACTS OF JAPAN vol. 010, no. 046 (E-383), 22 février 1986 & JP 60 200757 A (YASUKAWA DENKI SEISAKUSHO KK), 11 octobre 1985

## Description

La présente invention concerne un moteur linéaire.

On connaît l'intérêt des moteurs linéaires, qui évitent l'utilisation de moyens de transformation du mouvement de rotation en mouvement de translation.

Cependant, dans les moteurs linéaires la partie primaire comporte un bobinage et la partie secondaire, dont la longueur est égale à celle de la partie primaire plus à la course du déplacement qui peut donc être très longue, comporte, soit un bobinage du type cage dans le cas d'un moteur linéaire du type asynchrone, soit des aimants permanents dans le cas d'un moteur linéaire du type synchrone. Dans les deux cas, un tel moteur est onéreux, surtout si la course est longue : dans le cas du moteur linéaire asynchrone, le bobinage secondaire doit être refroidi, dans celui du moteur synchrone à aimants, on utilise généralement des aimants à base de terres rares, ce qui le rend de coût prohibitif pour une course tant soit peu longue ; en outre, ces aimants attirent fortement tous les matériaux magnétiques et le moteur doit être enfermé dans une enceinte étanche difficilement réalisable et onéreuse.

On connaît aussi un moteur linéaire pas à pas hybride. Dans un tel moteur, le primaire comprend un circuit magnétique comportant des dents et des encoches le long de l'entrefer, et séparé en deux par un aimant, chaque demi-circuit magnétique est équipé d'une bobine électrique, les deux bobines étant alimentées par un courant déphasé de 90° d'une bobine à l'autre. Le secondaire est un circuit magnétique possédant des dents et des encoches. Un tel moteur est peu coûteux mais très volumineux. En effet, les tôles du stator sont parcourues par un flux continu modulé en amplitude par le passage des dents, mais ce flux ne s'inverse jamais. La densité de force surfacique de ce type moteur est d'environ le tiers de celle d'un moteur où le flux s'inverse dans la tôle.

On connaît encore du document de brevet US-4 563 602 un moteur linéaire synchrone à aimants permanents. Dans ce moteur connu les tôles du stator sont parcourues par un flux dont le signe reste constant et il est nécessaire d'utiliser des aimants à base de terres rares pour obtenir des performances satisfaisantes, ce qui en augmente le coût de fabrication.

La présente invention a pour but de proposer un moteur linéaire palliant les inconvénients ci-dessus et qui est donc économique, et beaucoup moins volumineux que le moteur du type hybride pour un même effort nominal.

La présente invention a donc pour objet un moteur linéaire selon la revendication.

Il est précisé que, dans cette définition de l'invention, et dans tout ce qui suit, il est compté pour une unité une dent complète ou une encoche complète et qu'ainsi, si le circuit magnétique primaire comporte une demi-dent à chacune de ses extrémités, ces deux demi-dents sont comptées à elles deux pour une seule dent. Il en est de même pour les encoches et pour les aimants.

On va maintenant donner la description d'un exemple de mise en oeuvre de l'invention en se référant au dessin annexé dans lequel :
La figure 1 est une vue schématique montrant un moteur linéaire selon l'invention comportant deux pôles : P = 1.
La figure 2 représente à un instant t la valeur du flux le long de l'entrefer du moteur de la figure 1, créé par la coopération des aimants du circuit magnétique primaire avec les dents et encoches du circuit magnétique secondaire.
Les figures 3 et 4 sont respectivement équivalentes aux figures 1 et 2, mais après un déplacement relatif d'une distance égale à une encoche du circuit magnétique secondaire.

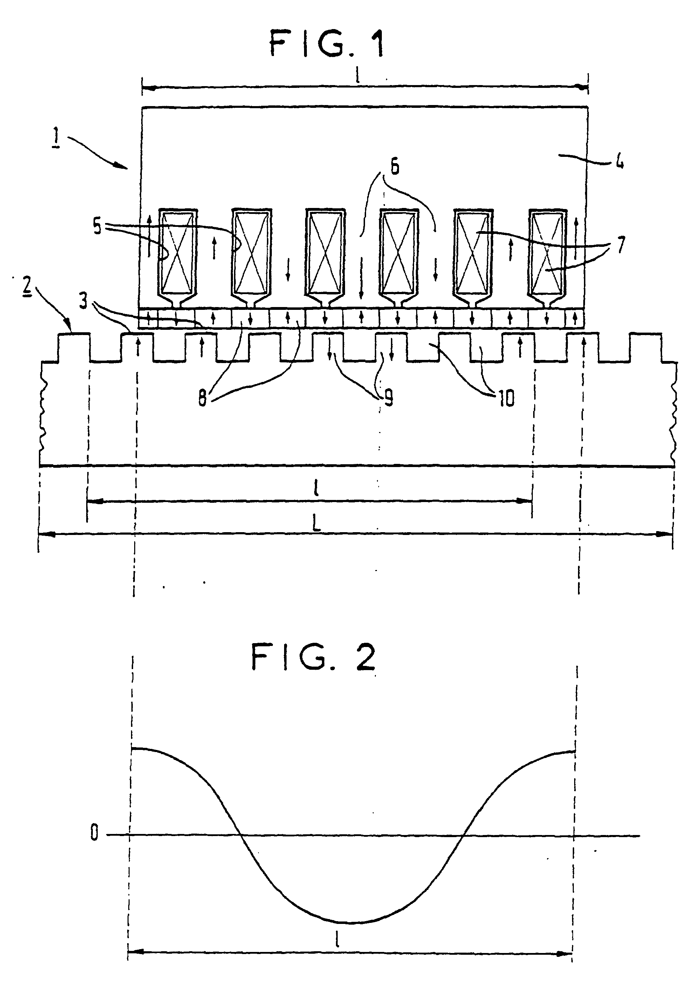

En se reportant à la figure 1, on voit ainsi un moteur linéaire selon l'invention comprenant une première partie 1 et une seconde partie 2 séparées par un entrefer plan 3.

La première partie 1 comporte un circuit magnétique primaire 4 de longueur ℓ comportant des encoches 5 et des dents 6 en nombre égal.

Dans l'exemple représenté, le nombre d'encoches Nₑ = 6, on a donc également six dents : N_{d} = 6 dont cinq dents entières plus une demi-dent à chaque extrémité du circuit. Il faut en effet considérer un tel moteur linéaire comme un moteur circulaire coupé et mis à plat.

Cette disposition, avec une demi-dent à chaque extrémité, est la plus pratique, en particulier pour le bobinage des encoches 5, mais, outre cette disposition, deux autres dispositions sont possibles : une encoche à l'une des extrémités et une dent à l'autre, ou encore une demi-encoche à chaque extrémité. Les encoches 5 sont équipées d'un bobinage polyphasé 7 à 2 P pôles, produisant un champ glissant.

Dans le cas de l'exemple, il s'agit d'un bobinage triphasé à deux pôles 2P = 2.

Cette première partie 1 est en outre équipée, le long de l'entrefer 3, tout le long de la longueur ℓ du circuit magnétique primaire 4, fixé à celui-ci à l'extrémité des dents et des encoches, une suite de 2 Nₑ = 2 N_{d} aimants 8 de polarité alternée comme l'indiquent les flèches.

Dans l'exemple décrit, il y a ainsi douze aimants : 2 Nₑ = 12. Comme dit plus haut, il s'agit de 2 Nₑ aimants entiers. Dans le cas présent, onze aimants entiers et un aimant coupé en deux, dont une moitié est placée à l'une des extrémités, et l'autre moitié à l'autre extrémité. En face de cette première partie 1, et séparée de l'entrefer plan 3, est disposée la seconde partie 2. Cette seconde partie 2 est un circuit magnétique secondaire qui comprend sur toute sa longueur L, qui est égale à la longueur ℓ de la première partie plus à la course x de déplacement de l'une des parties par rapport à l'autre, une succession de dents 9 et d'encoches 10.

Sur une longueur ℓ du circuit magnétique secondaire, il y a ne encoches 10 et n_{d} dents 9 avec nₑ = n_{d} = Nₑ + P ou bien nₑ = n_{d} = Nₑ - P.

Dans le cas de l'exemple décrit, on a vu que Nₑ = N_{d} = 6 et que P = 1, ici on a nₑ = Nₑ + P = 7.

Il y a donc sept dents et sept encoches sur une longueur ℓ du circuit magnétique secondaire 2.

Ainsi, grâce aux aimants 8 de polarité alternée et au circuit magnétique secondaire 2 comportant des dents et des encoches, on a, le long de l'entrefer 3, une réluctance variable de telle sorte que l'on obtient (en dehors de tout flux induit par le bobinage 7) un flux qui varie le long de l'entrefer et qui possède 2 P pôles.

Les flèches sur le circuit magnétique primaire 4 figurent la valeur et le sens du flux magnétique dans les dents 6. Ce flux est en outre représenté par la courbe de la figure 2. Sur la longueur ℓ du circuit magnétique primaire, on a un nombre de périodes spatiales complètes, ici une période puisque la construction représentée a été faite pour deux pôles (dans la position représentée un pôle complet au centre et un demi-pôle à chaque extrémité). Il s'agit des pôles provenant de la construction de la machine grâce aux aimants et au circuit magnétique secondaire avec dents et encoches.

Le bobinage 7 polyphasé doit être réalisé pour avoir le même nombre de pôles donc ici 2 P = 2.

La coopération des pôles "glissants" produit par le bobinage polyphasé 7 alimenté en courant alternatif, avec les pôles résultant de la disposition constructive ci-dessus produit une force de déplacement.

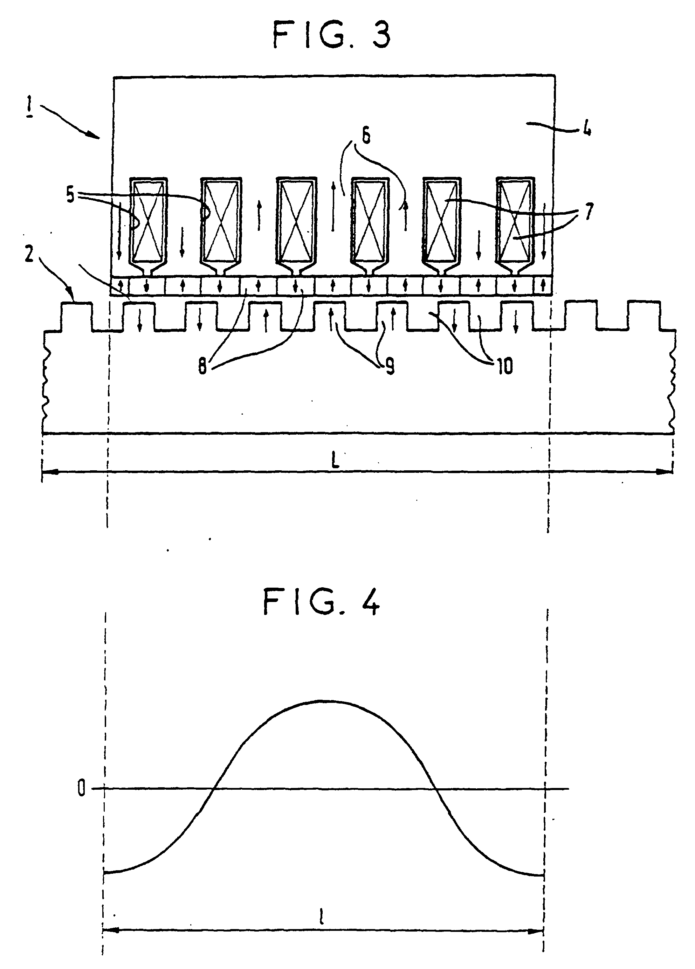

Dans cette construction, on voit que le circuit magnétique secondaire ne comprend ni aimants, ni bobinage et qu'en outre le flux dans les dents 6 du circuit magnétique primaire (flux produit par les aimants 8) s'inverse chaque fois que l'on s'est déplacé d'une distance égale à une encoche (ou une dent) du circuit magnétique secondaire 2 comme le montre les figures 3 et 4 identiques aux figures 1 et 2, mais dans lesquelles la première partie 1 s'est déplacée d'une longueur égale à une dent 9.

On obtient ainsi un moteur linéaire sans que la partie longue (généralement fixe) n'ait, ni aimants, ni bobinage, en ayant cependant un bon effort puisque l'on obtient une inversion alternative du flux dans les dents du circuit magnétique primaire, contrairement au moteur linéaire hybride cité en introduction.

## Revendications

1. Moteur linéaire comprenant une première partie (1) comportant un circuit magnétique primaire (4) comprenant Ne encoches (5) et Nd dents (6) alternées, avec Nₑ = N_{d}, un bobinage électrique polyphasé (7) à 2P pôles étant placé dans lesdites encoches (5) et produisant, à un instant t, lorsqu'il est alimenté par un courant alternatif sur la longueur ℓ du circuit magnétique couvrant les Nₑ encoches (5) et N_{d} dents (6), un champ magnétique ondulé de longueur ℓ de P périodes, une deuxième partie (2), disposée en face de la première (1) et séparée d'elle par un entrefer plan (3), ladite deuxième partie ayant une longueur L = ℓ + x, x étant la longueur du déplacement relatif des deux parties l'une par rapport à l'autre, ladite deuxième partie constituant un circuit magnétique secondaire, ledit circuit magnétique secondaire (2) comprenant face audit entrefer (3) et sur toute sa longueur L une succession de dents (9) et d'encoches (10), ladite première partie (1 ) comprenant, le long dudit entrefer (3), fixé au circuit magnétique primaire (4), une suite d'aimants (8) de polarité alternée, **caractérisé en ce que** ladite suite d'aimants comporte 2 Nₑ = 2 N_{d} aimants fixés à l'extrémité des dents (6) et des encoches (5) du circuit magnétique primaire (4), **en ce que** ladite suite d'aimants couvre toute ladite longueur ℓ dudit circuit magnétique primaire (4), **en ce que** le nombre ne d'encoches (10), sur une longueur ℓ du circuit magnétique secondaire (2) est nₑ = Nₑ + P ou bien nₑ = Nₑ - P, et **en ce que**, sur une même longueur ℓ, le nombre n_{d} de dents (9) du circuit secondaire est égal à nₑ.

## Patentansprüche

1. Linearmotor mit einem ersten Teil (1), bestehend aus einem Primärmagnetkreis (4), mit abwechselnd Nₑ Nuten (5) und N_{d} Zähnen (6), wobei Nₑ = N_{d} , einer mehrphasigen elektrischen Wicklung (7) mit 2P Polen, die in den besagten Nuten angeordnet ist (5), und der zu einer Zeit t, wenn er von einem Wechselstrom über die die Nₑ Nuten (5) und N_{d} Zähne (6) überdeckende Länge I des Magnetkreises gespeist wird, ein wellenförmiges Magnetfeld der Länge I mit P Perioden erzeugt, und mit einem zweiten Teil (2), gegenüber dem ersten (1) Teil angeordnet und von diesem durch einen ebenen Luftspalt (3) getrennt, wobei besagter zweiter Teil eine Länge L = l + x hat, wobei x die Länge der Relativbewegung der beiden Teile zueinander ist, und besagter zweiter Teil einen Sekundärmagnetkreis bildet, wobei besagter Sekundärmagnetkreis (2) gegenüber des besagten Luftspalts (3) und über die gesamte Länge L eine Abfolge von Zähnen (9) und Nuten (10) aufweist, und besagter erster Teil (1) entlang des besagten Luftspalts (3) und befestigt am Primärmagnetkreis (4) eine Folge von Magneten (8) mit wechselnder Polung aufweist, **dadurch gekennzeichnet, dass** besagte Folge von Magneten 2 Nₑ = 2 N_{d} Magneten enthält, die am Ende der Zähne (6) und Nuten (5) des Primärmagnetkreises (4) befestigt sind, und dass besagte Folge von Magneten die gesamte Länge I des besagten Primärmagnetkreises (4) überdeckt, und dass die Anzahl nₑ von Nuten (10) über die Länge I des Sekundärmagnetkreises (2) gleich nₑ = Nₑ + P oder nₑ = Nₑ - P beträgt, und dass auf derselben Länge I die Anzahl n_{d} von Zähnen (9) des Sekundärkreises gleich nₑ ist.

## Claims

1. Linear motor comprising a first part (1) including a primary magnetic circuit (4) comprising Ne notches (5) and Nd teeth (6) in alternation, with Nₑ = N_{d}, a polyphase electrical winding (7) with 2P poles being placed in the said notches (5) and producing an alternating magnetic field with a length *l* of P periods over the length *l* of the magnetic circuit covering the Nₑ notches (5) and N_{d} teeth (6) at a time t, when it is supplied with an AC current, a second part (2), arranged facing the first (1) and separated from it by a plane air gap (3), the said second part having a length L = *l* + x, x being the length of the relative displacement of the two parts with respect to each other, the said second part constituting a secondary magnetic field, the said secondary magnetic field (2) comprising a series of teeth (9) and notches (10) facing the said air gap (3) and over its length L, the said first part (1) comprising a series of magnets (8) with alternating polarity fixed to the primary magnetic circuit (4) along the said air gap (3), **characterised in that** the said series of magnets includes 2 Nₑ = 2 N_{d} magnets fixed to the end of the teeth (6) and of the notches (5) of the primary magnetic circuit (4), **in that** the said series of magnets covers all of the said length *l* of the said primary magnetic circuit (4), **in that** the number ne of notches (10) over a length *l* of the secondary magnetic circuit (2) is nₑ = Nₑ + P, or alternatively nₑ = Nₑ - P, and **in that** the number n_{d} of teeth of the secondary circuit (9) is equal to nₑ for a given length *l*.
